Europäisches Patentamt

European Patent Office

Office européen des brevets

(11) Veröffentlichungsnummer: **0 431 247 A1**

## (12) EUROPÄISCHE PATENTANMELDUNG

(21) Anmeldenummer: 90111089.0

(22) Anmeldetag: **12.06.90**

(51) Int. Cl.5: **B60B 33/02**, B62B 5/04

(30) Priorität: **07.12.89 DE 8914431 U**

(43) Veröffentlichungstag der Anmeldung:
**12.06.91 Patentblatt 91/24**

(84) Benannte Vertragsstaaten:
**BE DE ES FR GB IT NL SE**

(71) Anmelder: **AS ROLLEN GMBH**
**Industriestrasse 47 a**
**W-5609 Hückeswagen(DE)**

(72) Erfinder: **Schulte, Arnolf**
**Friedenstrasse 8c**
**W-5632 Wermelskirchen 1(DE)**

(74) Vertreter: **Kohlmann, Karl Friedrich, Dipl.-Ing.**
**et al**
**Hoffmann, Eitle & Partner Arabellastrasse 4**
**(Sternhaus)**
**W-8000 München 81(DE)**

(54) **Laufrolle, insbesondere Lenkrolle, für Möbel, Apparate oder dergleichen.**

(57) Die Erfindung betrifft eine Laufrolle (1) für Möbel, Apparate u.dgl., deren Blockiervorrichtung (7) einen Stellhebel (8) und einen Bremshebel (11) aufweist, der schwenkbeweglich im Rollengehäuse (2) gelagert ist und mittels einer Druckanordnung (13;50) in eine die Drehbewegung eines Rades (4) hemmende Bremsstellung überführbar ist. Um bei einem einfachen Aufbau einen weitgehend universellen Einsatz bei guter Zugänglichkeit des Stellhebels möglich zu machen, ist die Drehachse des Stellhebels (8) in der Radachse (3) angeordnet, während die Drehachse des Bremshebels (11) außerhalb des Durchmessers des Rades (4) liegt.

EP 0 431 247 A1

## DIE ERFINDUNG BETRIFFT EINE LAUFROLLE, INSBESONDERE EINE LENKROLLE FÜR MÖBEL, APPARATE ODER DERGLEICHEN.

Eine derartige Laufrolle ist aus der DE-A-2 937 573 bekannt. Bei dieser bekannten Laufrolle ist die Drehachse des Stellhebels nahe der Radumfangsfläche, d. h. weit oberhalb der Radachse angeordnet. Dadurch ergeben sich bei gattungsgemäßen Laufrollen Einschränkungen hinsichtlich des Einbaues, was einen nicht unerheblichen Nachteil darstellt, da Laufrollen üblicherweise als Zulieferteil für Geräte verschiedenster Art konzipiert werden. Aufgrund der genannten Anordnung des Stellhebels ergibt sich zum Beispiel das Problem, daß häufig ein nur sehr geringer Abstand des Stellhebels zur Geräteunterseite verbleibt, was die Zugänglichkeit des Stellhebels und damit des Bremsbetätigungsarmes und des Bremslösearmes stark beeinträchtigt.

Es ist daher Aufgabe der vorliegenden Erfindung, eine Laufrolle der im Oberbegriff des Anspruches 1 angegebenen Art derart weiterzubilden, daß bei einfachem Aufbau ein weitgehend universeller Einsatz bei guter Zugänglichkeit des Stellhebels ermöglicht wird.

Die Lösung dieser Aufgabe erfolgt durch die Merkmale des Anspruches 1.

Durch die Anordnung der Drehachse des Stellhebels in der Radachse wird zunächst erreicht, daß der Bremsbetätigungsarm sehr tief gelegt werden kann. Durch diese konstruktive Ausgestaltung können die erfindungsgemäßen Lenkrollen relativ tief unter einen Unterbau eines Gerätes gelegt werden, ohne daß die Zugänglichkeit mit dem Fuß behindert wird.

Ferner ergibt sich der besondere Vorteil eines einfachen Aufbaues mit relativ wenigen Teilen. Dies wird insbesondere durch die Verlegung der Drehachse des Bremshebels außerhalb der Radkontur erreicht, da in diesem Bereich mehr Platz vorhanden ist als innerhalb der Radkontur, so daß zur Lagerung des Bremshebels technisch einfach aufgebaute und insbesondere einfach montierbare Lagerungsvorrichtungen, wie beispielsweise Nieten, Stifte oder Achsen herangezogen werden können.

Insgesamt ermöglicht die erfindungsgemäße Ausbildung der Laufrolle eine sehr einfache Formgebung des Stellhebels. Es können hierbei ohne Probleme geschlossene oder offene konstruktionen gewählt werden.

Darüber hinaus ergibt sich der besondere Vorteil, daß durch die Anordnung der Drehachse des Stellhebels in der Radachse der Stellhebel ferner als Fadenschutz ausgebildet werden kann und somit dazu in der Lage ist, eine Doppelfunktion auszuüben.

Zur Betätigung der Blockiervorrichtung wird der Bremsbetätigungsarm des Stellhebels beispielsweise mit dem Fu3 betätigt, wodurch die Druckanordnung den Bremshebel in die Bremsstellung überführt. Durch die Anordnung der Drehachse des Stellhebels in der Radachse ergibt sich hierbei als ein weiterer Vorteil, daß der notwendige Steuerhub der Druckanordnung mit sehr geringen Winkeländerungen der fest mit dem Bremsbetätigungsarm verbundenen Trittfläche erreicht wird. Diese geringe Winkeländerung sowie die zuvor bereits erwähnte Ausbildung des Bremshebels ermöglichen die nahezu freie Wahl des Abstandes der Trittfläche zur Unterkante des jeweiligen Gerätes, an dem die erfindungsgemäße Laufrolle befestigt ist. Im extremsten Falle ist es sogar möglich, die Trittfläche im gebremsten Zustand in derselben Ebene wie die Radaufstandsfläche zu legen.

Die Unteransprüche haben vorteilhafte Weiterbildungen der Erfindung zum Inhalt.

Ist der Bremshebel in sich federnd ausgebildet, ergibt sich der Vorteil einer Verstärkung der zuvor bereits erwähnten Selbsthemmwirkung, vor allem im Zusammenhang mit dem federnden Eingriff in eine Verzahnung am Kopflager des Gabeldrehkranzes und durch die im auf die Radoberfläche gedrückten Zustand erzeugte Rückstellkraft.

Ist die Druckanordnung als Nockenanordnung ausgebildet, ergibt sich der Vorteil, daß durch die im Verhältnis zur Steuerkurve der Nockenanordnung lange Hebelübersetzung nur kleine Betätigungskräfte erforderlich sind.

Eine bevorzugte alternative Ausführungsform stellt die Ausbildung der Druckanordnung als Kniehebelgelenkanordnung dar. Diese ermöglicht vorteilhafterweise besonders einfache Anpassungen an unterschiedliche Raddurchmesser und das Vorsehen einer Nachstelleinrichtung, z.B. in Form einer Stellschraube.

Eine besonders günstige Anordnung stellt das Vorsehen der Nockenanordnung am Bremslösearm des Stellhebels dar.

Durch eine kappenartige Ausbildung des Stellhebels ergibt sich die Möglichkeit einer Integrierung desselben in das Rollengehäuse, so daß eine weitgehend geschlossene Konstruktion erreichbar ist.

Ferner ist es grundsätzlich möglich, den Stellhebel auch bei einer Laufrolle vorzusehen, die zwei Räder aufweist, wobei der Stellhebel dann zwischen den Rädern angeordnet sein kann.

Auch bei einer Ausbildung des Rollengehäuses in Form einer Drahtkonstruktion kann der Stellhebel gemäß vorliegender Erfindung in der Radachse gelagert werden, wobei er zwischen den bevorzugterweise kreisförmig gebogenen Drähten der Drahtkonstruktion angeordnet werden kann.

Hierbei kann der Bremshebel ein- oder zweiteilig ausgebildet sein.

Schließlich ist es möglich, den Stellhebel aus
zwei spiegelsymmetrischen Teilen aufzubauen, die
verschraubt werden und gleichzeitig bei einer besonders bevorzugten Ausführungsform als Radabdeckung bzw. Fadenschutz ausgebildet sein können. Hierbei kann sich die aus zwei Teilen gebildete Baueinheit um den Bolzen des Kugellagers des
Rades drehen. Dadurch entfällt die Notwendigkeit,
den Stellhebel an irgendeiner Stelle des Rollengehäuses anzubringen. Daher bietet sich diese Ausbildungsform insbesondere für Drahtkonstruktionen
an.

Weitere Einzelheiten, Merkmale und Vorteile
der Erfindung ergeben sich aus nachfolgender Beschreibung von Ausführungsbeispielen anhand der
Zeichnung.

Es zeigt:

| | |
|---|---|
| Fig. 1 | eine Teilansicht einer teilweise geschnittenen ersten Ausfüh-rungsform der erfindungsgemä-ßen Laufrolle in ungebremstem Zustand, |
| Fig. 2 | eine der Fig. 1 entsprechende Darstellung in gebremstem Zustand, |
| Fig. 3 | eine der Fig. 1 entsprechende Darstellung einer zweiten Ausführungsform, |
| Fig. 4 | eine der Fig. 2 entsprechende Darstellung der zweiten Ausführungsform gemäß Fig. 3, |
| Fig. 5 | eine Ansicht der Laufrolle gemäß den Fig. 3 und 4 entlang der Schnittlinie A-A in Fig. 4, |
| Fig. 6 | die in Fig. 5 dargestellte Lauf-rolle in Draufsicht, wobei je-doch der linksseitige Drahtbü-gel zum Rad aus Übersichtlich-keitsgründen weggeschnitten wurde, |
| Fig. 7 bis 10 | eine Ansicht der Radaußenseite, der Radinnenseite, von oben bzw. von vorn eines aus zwei Hebelteilen aufgebauten Stellhebels mit L-förmigen Basisteil, |
| Fig. 11 | eine der Fig. 1 entsprechende Darstellung einer dritten Ausführungsform, |
| Fig. 12 | eine der Fig. 2 entsprechende Darstellung der dritten Ausführungsform gemäß Fig. 11, |
| Fig. 13 | eine perspektivische Unteran- |

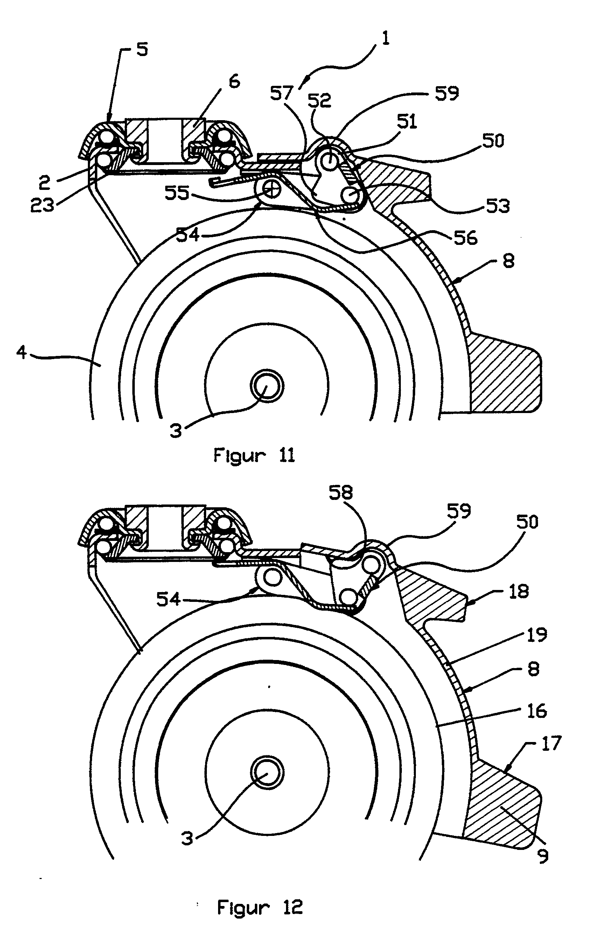

sicht des Bremshebels der
Ausführungsform gemäß den
Fig. 11 und 12, und

| | |
|---|---|
| Fig. 14 | eine perspektivische Draufsicht auf den Bremshebel gemäß Fig. 13. |

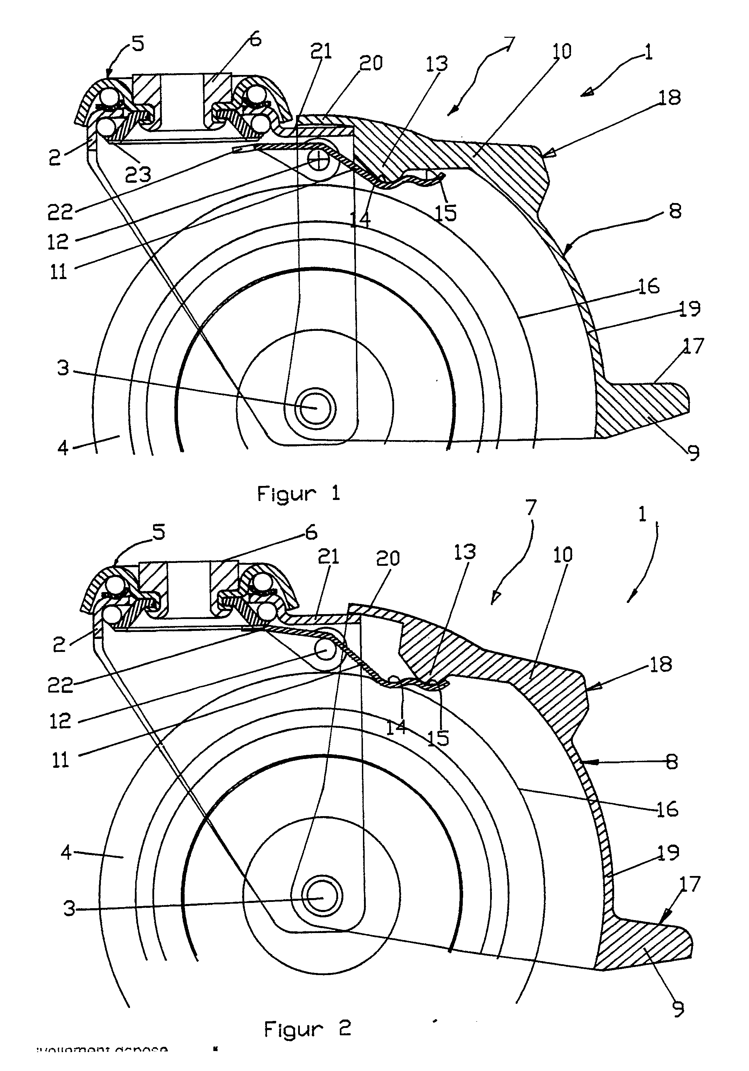

In Fig. 1 ist eine erste Ausführungsform einer
erfindungsgemäßen Laufrolle 1 dargestellt. Die
Laufrolle 1 weist ein Rollengehäuse 1 auf, das eine
Radachse 3 für zumindest ein in Fig. 1 nur teilweise dargestelltes Rad 4 haltert. Das Rollengehäuse
1 ist ferner über ein Kopf- bzw. Schwenklager 5
vertikal um einen Tragzapfen 6 herum schwenkbeweglich gelagert.

Die erfindungsgemäße Laufrolle 1 weist ferner
eine Blockiervorrichtung 7 auf, die dazu dient, zumindest die Drehbewegung des Rades 4 um die
Radachse 3 zu hemmen bzw. zu bremsen. Hierzu
weist die Blockiervorrichtung 7 einen Stellhebel 8
auf, der einen Bremsbetätigungsarm 9 und einen
Bremslösearm 10 umfaßt. Ferner weist die Blok-
kiervorrichtung 7 einen Bremshebel 11 auf, der um
eine Achse 12 schwenkbeweglich im Rollengehäuse 2 gelagert ist. Der Bremshebel 11 kann zwischen einer in Fig. 1 dargestellten Freigabestellung
und ei ner in Fig. 2 dargestellten Bremsstellung um
die Achse 12 geschwenkt werden. Hierbei ist der
Bremshebel 11 durch eine in allen Figuren nicht
näher dargestellte Feder in die Freigabestellung
gemäß Fig. 1 vorbelastet. Die zur Erzeugung der
Federkraft erforderliche Rückdruckfeder ist in den
Figuren aus Übersichtlichkeitsgründen nicht dargestellt. Die Federwirkung läßt sich durch ein in den
Bremshebel integriertes Bauelement in Form einer
Schrauben- oder einer Drehfeder erzielen.

Zur Überführung des Bremshebels 11 in die in
Fig. 2 dargestellte Bremsstellung ist eine Nockenanordnung 13 vorgesehen, die mit zwei Aussparungen 14,15 zusammenwirkt, wie dies im einzelnen aus den Fig. 1 und 2 ersichtlich ist. Hieraus
wird deutlich, daß der Bremshebel 11 zur Überführung in die in Fig. 2 dargestellte Bremsstellung
entgegen der ihn in seine Freigabestellung vorbelastenden Federkraft mit Hilfe der Nockenanordnung
13 gegen die Radumfangsfläche 16 gedrückt wird,
wodurch er das Rad 4 gegen eine Drehbewegung
um die Radachse 3 bremst.

Die Fig. 1 und 2 verdeutlichen hierbei, daß die
Drehachse des Stellhebels 8 in der Radachse 3
liegt, während die Drehachse 12 des Bremshebels
11 außerhalb des Radumfanges 16 angeordnet ist.
Dies ergibt zum einen den Vorteil, daß die am
Bremsbetätigungsarm 9 vorgesehene Trittfläche 17
in eine Ebene verlagert werden kann, die ungefähr
einer durch die Radachse 3 gelegten Horizontalebene entspricht, so daß bei montierter Laufrolle 1
unterhalb eines Gerätes genügend Platz zur Betätigung des Bremsbetätigungsarmes 9 verbleibt. Die am Bremslösearm 10 vorgesehene Trittfläche 18 ist im wesentlichen aufrecht angeordnet, und in unmittelbarer Nähe zur Nockenanordnung 13 vorgesehen. Auch diese Anordnung gewährleistet eine problemlose Betätigung zur Lösung des Bremshebels 11 selbst dann, wenn die Laufrolle knapp unter der Unterseite eines Gerätes angeordnet ist.

Bei der Ausführungsform gemäß den Fig. 1 und 2 ist der Stellhebel 8 kappenartig ausgebildet, so daß der Bremsbetätigungsarm 9 und der Bremslösearm 10 über ein abgerundetes Kappenteil 19 miteinander verbunden sind. Die Nockenanordnung 13 ist hierbei ein integraler Bestandteil des Stellhebels 8, der in der zuvor beschriebenen Konfiguration ein einstückiges Bauteil bilden kann, das eine Gleitzunge 20 aufweist, die auf einem entsprechenden Gehäuseabschnitt 21 des Rollengehäuses 2 bei der Bewegung zwischen der Freigabe- und Bremsstellung gleiten kann, wie dies im einzelnen aus der Darstellung gemäß den Fig. 1 und 2 ersichtlich ist.

Der Bremshebel 11 der erfindungsgemäßen Laufrolle 1 ist ein in sich federnd ausgebildeter, zweiteiliger Hebel, dessen den Nockenausnehmungen 14 und 15 gegenüberliegender Arm zumindest einen Bremszahn 22 aufweist, der in eine Gegenverzahnung 23 des gerätefesten Teiles des Kopflagers 5 eingreifen kann, wodurch die Schwenkbewegung der Rolle 1 um den Tragzapfen 6 ebenfalls blockiert werden kann. Dadurch, daß der Bremshebel 11 außerhalb des Radumfanges bzw. Raddurchmessers angeordnet ist, ergibt sich der Vorteil einer vereinfachten Montage, da dieser Bereich für die Anordnung der Drehachse 12 des Bremshebels 11 leicht zugänglich ist, so daß entweder Nieten oder durchsteckbare Achsen auf einfache Art und Weise bei der Montage angebracht werden können.

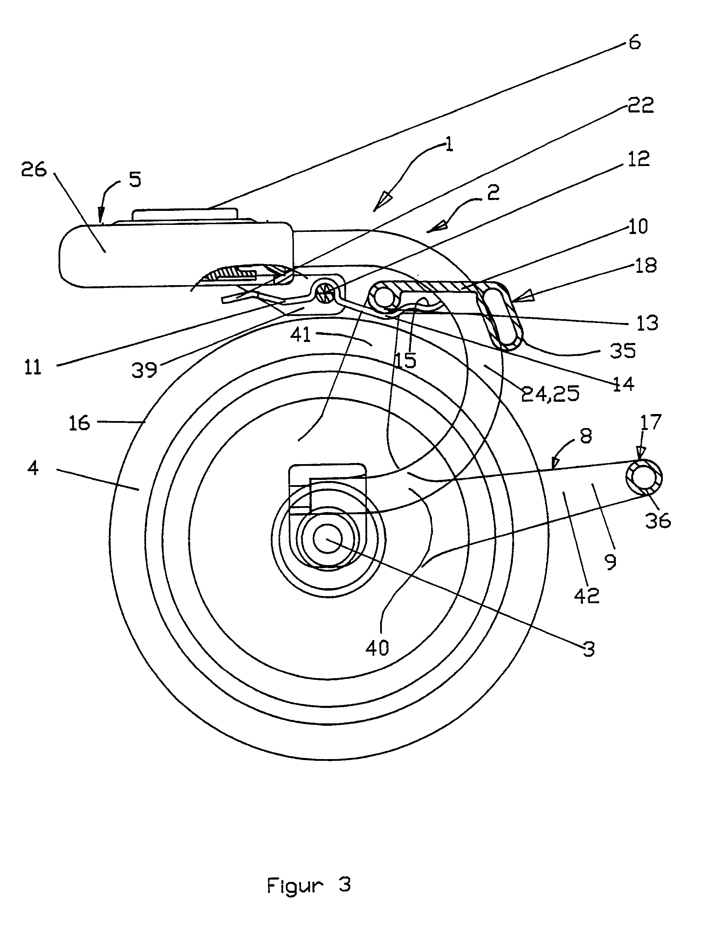

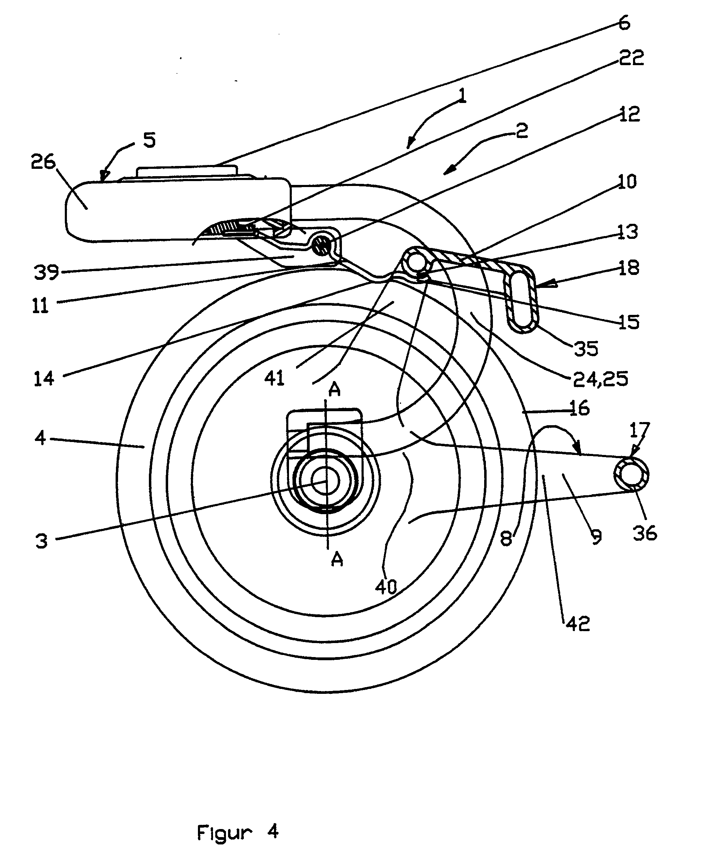

Unter Bezugnahme auf die Fig. 3 bis 6 wird nachfolgend ein zweites Ausführungsbeispiel der erfindungsgemäßen Laufrolle beschrieben, wobei die Teile derselben, die mit der Ausführungsform gemäß den Fig. 1 und 2 übereinstimmen, mit den gleichen Bezugzeichen versehen sind.

Demgemäß zeigen die Fig. 3 bis 6 ebenfalls die Laufrolle 1, deren Rollengehäuse 2 in diesem Falle aus Federdrähten 24,25 aufgebaut ist. Die Federdrähte 24,25 sind hierbei über eine Blechkapselung 26 mit dem Kopflager 5 verbunden.

Wie sich aus den Fig. 3 bis 6 ergibt, ist die Blechkapselung 26 ein innen hohles Gehäuseteil, das das Kopflager 5 mit allen seinen Teilen vollständig umschließt.

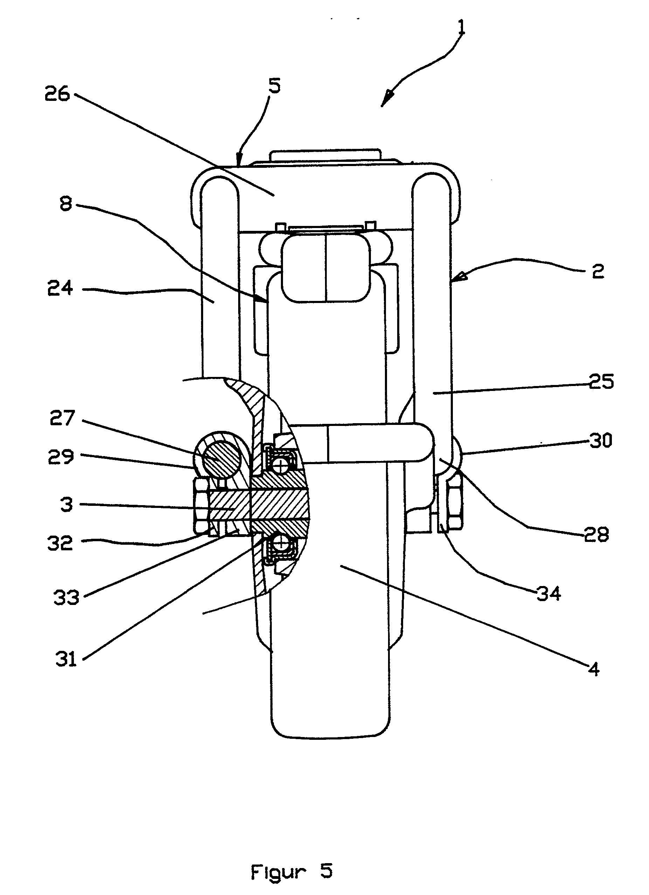

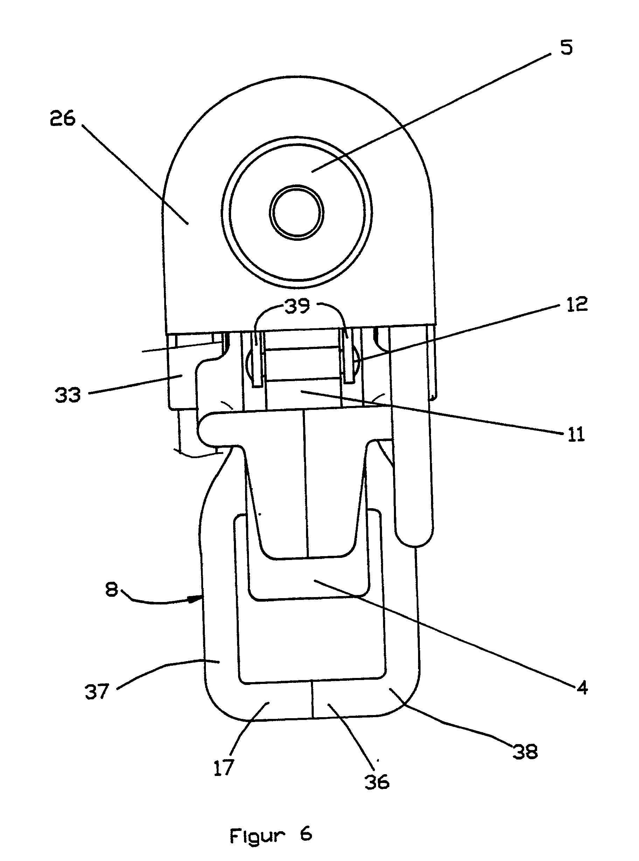

Die Federdrähte 24,25 sind gemäß der Darstellung der Fig. 5 und 6 im Abstand und parallel zueinander angeordnet und bogenförmig von der Blechkapselung 26 in den Bereich der Radachse 3 geführt, die bei dieser Ausführungsform als Radachsschraube ausgebildet ist. Wie aus Fig. 5 ersichtlich ist, wird der im Bereich der Radachse 3 angeordnete Endabschnitt 27 bzw. 23 der Federdrähte 24,25 mit Hilfe eines schellenartig ausgebildeten Radklemmelementes 29 bzw. 30 an der Radachse 3 festgelegt. Die Radachse bzw. Radachsschraube 3 ist hierbei durch eine feststehende Führungsbuchse 31 hindurchgeführt und durchgreift hierbei gemäß Fig. 5 die Ausnehmungen zweier Laschen 32 und 33 des Radklemmelementes 29 wie auch entsprechend ausgebildete Laschen des Radklemmelementes 30, von denen gemäß der in Fig. 5 gewählten Darstellung jedoch nur die Lasche 34 sichtbar ist. Wie sich aus dem geschnittenen Abschnitt der Fig. 5 ergibt, weisen die Laschen 32 und 33 einen gewissen Abstand zueinander auf, so daß beim Festziehen der Radachsschraube 3 die erforderliche Klemmwirkung des den jeweiligen Endabschnitt 27 bzw. 28 umgreifenden bogenförmigen Teiles des Radklemmelementes 29 bzw. 30 erzeugbar ist.

Bei der in den Fig. 3 bis 6 dargestellten Ausführungsform der erfindungsgemäßen Laufrolle 1 ist der Stellhebel 8 zwischen den Federdrähten 24 und 25 angeordnet und auf der Führungsbuchse 31 der Radachse 3 schwenkbeweglich gelagert, was sich insbesondere aus dem geschnittenen Bereich der Fig. 5 ergibt.

Fig. 3 verdeutlicht, daß bei dieser Ausführungsform die Grundform des Stellhebels 8 aufgrund eines entsprechend geformten Basisteiles 40 im wesentlichen L-förmig ist. An dem im Bereich des Bremshebels 11 angeordneten oberen Schenkel 41 des L-förmigen Basisteiles 40 ist der Bremslösearm 10 angeordnet, dessen Trittfläche 18 auf einem abgewinkelten im wesentlichen elliptisch ausgebildeten Hohlprofil 35 angeordnet ist.

Der Bremsbetätigungsarm 9 des Stellhebels 8 der Ausführungsform gemäß den Fig. 3 bis 6 weist am freien Ende des unteren Schenkels 42 einen hohlzylindrisch ausgebildeten Querholm 36 auf, der im rechten winkel zum Bremsbetätigungsarm 9 angeordnet ist und gemäß Fig. 6 im Abstand vor dem Rad 4 angeordnet ist, so daß seine Trittfläche 17 frei zugänglich ist. Die sich aus dieser Anordnung ergebende Bügelform kann insbesondere aus Fig. 6 entnommen werden.

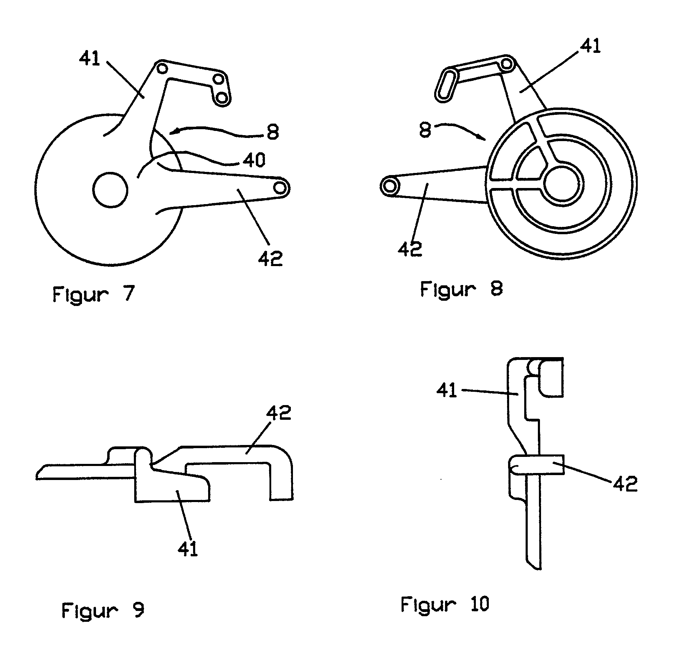

Die Figuren verdeutlichen ferner, daß der Stellhebel 8 gemäß den Fig. 3 bis 6 aus zwei Hebelteilen 37 und 38 zusammengesetzt ist, die spiegelsymmetrisch ausgebildet sind. Der Aufbau dieser Hebelteile 37,38 ergibt sich im einzelnen aus den Fig. 7 bis 10, auf die diesbezüglich hingewiesen wird. Die Hebelteile 37 und 38 können beispielsweise nach Aufstecken auf die Radachse 3 miteinander verschraubt werden, so daß sich ein im Bereich der Radachse 3 weitgehend geschlossenes Gehäuse ergibt. Bei dieser Ausführungsform bildet der Stellhebel 8 gleichzeitig eine Radabdeckung und einen Fadenschutz. Da der Stellhebel 8 dieser Ausführungsform bei der Betätigung um die Radachse 3 schwenkt, entfällt die Notwendigkeit, den Stellhebel 8 an irgend einer Stelle des Rollengehäuses 2 anzubringen. Daher bietet sich diese Ausführungsform insbesondere für aus Drähten ausgebildete Rollengehäuse an.

In Ergänzung zu den vorangehenden Ausführungen bezüglich der Fig. 3 bis 6 ist hervorzuheben, daß bei dieser Ausführungsform die Achse 12 in Form eines Bolzens oder eines Nietes an Achslaschen 39 angebracht ist, die seitlich an der Blechkapselung 26 angebracht sind, wie dies insbesondere auch aus Fig. 3 ersichtlich ist.

Ansonsten kann bezüglich der Funktion und des Aufbaues der sonstigen Teile auf die Ausführungen zur Ausführungsform gemäß den Fig. 1 und 2 Bezug genommen werden.

In den Fig. 11 und 12 ist eine dritte Ausführungsform der Laufrolle 1 dargestellt, die einen Stellhebel 8 aufweist, dessen grundlegender Aufbau der Ausführungsform gemäß den Fig. 1 und 2 entspricht, so daß alle mit dieser Ausführungsform übereinstimmenden Teile in den Fig. 11 und 12 mit den gleichen Bezugszeichen versehen sind. Insoweit wird auf die Beschreibung der ersten Ausführungsform verwiesen.

Im Gegensatz zur Ausführungsform gemäß den Fig. 1 und 2 ist die Druckanordnung als Kniehebelgelenkanordnung 50 ausgebildet, die einen Übertragungshebel 51 aufweist, der an einem seiner Enden über ein Schwenklager 52 schwenkbeweglich am Stellhebel 8 angelenkt ist. Wie aus den Fig. 11 und 12 hervorgeht, greift der Übertragungshebel 51 an seinem dem Schwenklager 52 gegenüberliegenden Ende über eine weitere Schwenklagerung 53 an einem starren Rahmen 54 an, der seinerseits an seinem anderen Ende an einer Drehachse 55 angelenkt ist, die die Drehachse des Bremshebels 56 dieser Ausführungsform bildet.

Die Fig. 11 und 12 verdeutlichen ferner, daß der Übertragungshebel 51 eine Anschlagnase 57 aufweist, die in der in Fig. 12 dargestellten Bremsstellung an einer Anschlagfläche 58 des Stellhebels 8 anliegt und somit die Verschwenkung des Stellhebels 8 begrenzt.

Der Stellhebel 8 weist ferner einen haubenförmig ausgebeulten Bereich 59 auf, unterhalb dessen das Schwenklager 52 des Übertragungshebels 51 unter Anpassung an dessen Form angeordnet ist.

Wie gesagt entspricht ansonsten die Ausbildung insbesondere des Stellhebels 8, dessen Anordnung an der Radachse 3 sowie die Ausbildung des Rollengehäuses 2 mit seinem Schwenklager 5 der Ausführungsform gemäß den Fig. 1 und 2, so daß hierauf Bezug genommen wird.

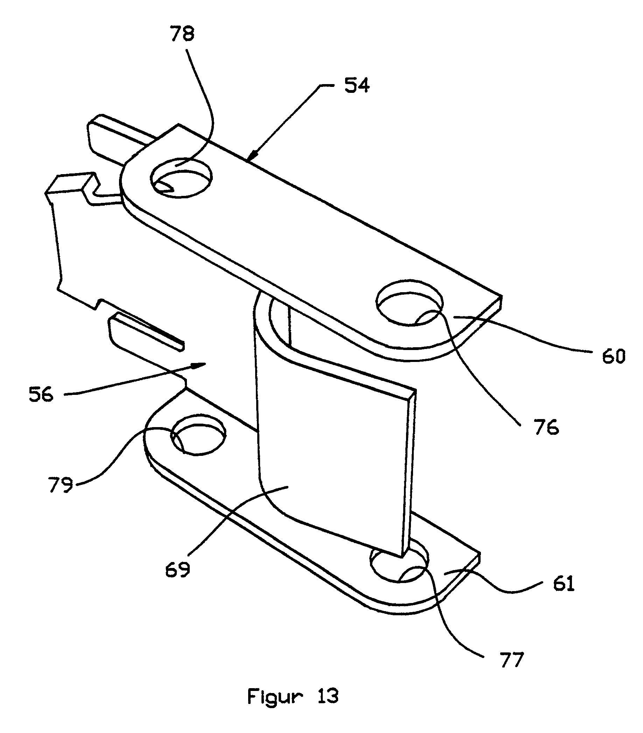

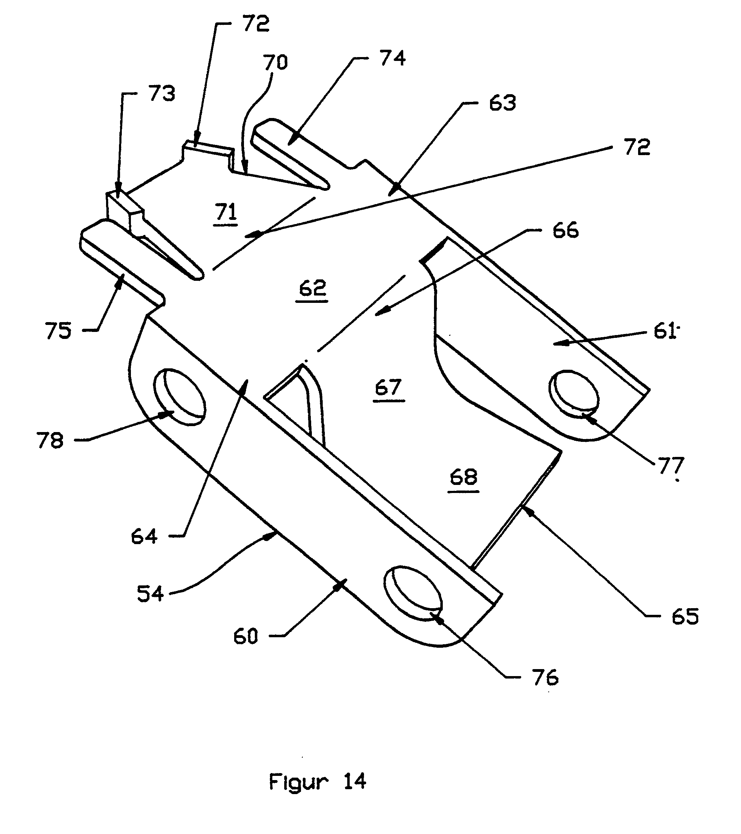

Die Fig. 13 und 14 verdeutlichen, daß der starre Rahmen 54 zwei parallel zueinander angeordnete leistenförmige und im wesentlichen rechteckförmig mit zwei abgerundeten Unterkanten versehene Rahmenteile 60 und 61 aufweist, zwischen denen der Bremshebel 56 angeordnet ist.

Der Bremshebel 56 selber weist einen starren Befestigungsabschnitt 62 in Form einer Befestigungsplatte auf, die an ihren seitlichen Enden 63 und 64, die die Schmalseiten der rechteckigen Platte 62 darstellen, mit den Rahmenteilen 60 und 61 fest verbunden ist.

Der Bremshebel 56 weist ferner einen gebogenen und elastisch federnden Bremsabschnitt 65 auf, der an einem seiner Enden 66 fest mit dem Befestigungsabschnitt 62 verbunden ist. Wie die Fig. 13 und 14 verdeutlichen, weist der Bremsabschnitt 65 ausgehend von seinem Ende 66 einen S-förmig geschwungenen Teil 67 auf, an den sich ein im wesentlichen ebener Endteil 68 anschließt. Der S-förmige Teil 57 und der Endteil 68 weisen eine geringere Breite als diejenige des Befestigungsabschnittes 62 auf, so daß zwischen den seitlichen Rändern der Teile 67 und 68 und den jeweils benachbarten Rahmenteilen 60 und 61 ein Freiraum verbleibt, wie dies insbesondere aus Fig. 14 ersichtlich ist.

Aus Fig. 13 wiederum ist ersichtlich, daß an der im Montagezustand der Radoberfläche 16 zugewandten Unterseite des S-förmig geschwungenen Teiles 67 eine Radbremsfläche 69 angeordnet ist, deren Krümmungsradius je nach den Einbauverhältnissen variieren kann.

Fig. 14 verdeutlicht vor allem, daß sich in die zum Bremsabschnitt 65 entgegengesetzte Richtung ein Rastabschnitt 70 aus erstreckt, der im Beispielsfalle einen trapezförmigen elastisch ausgebildeten Hauptkörper 71 aufweist, der an seiner Basis 72 mit dem Befestigungsabschnitt 62 verbunden ist. Am freien Ende sind an den Längsrändern des Hauptkörpers 71 im Beispielsfalle zwei Rastzähne 72 und 73 angebracht, die mit der aus den Fig. 11 und 12 ersichtlichen Gegenverzahnung 23 des gerätefesten Teiles des Kopflagers 5 zur Blockierung der Drehbewegung zusammenwirken können. Der Eingriff der Rastzähne 72 und 73 in die Gegenverzahlung 23 ist aus der Darstellung der Fig. 12 erkennbar.

Zu beiden Seiten des Rastabschnittes 70 ist bei der in den Fig. 13 und 14 dargestellten Ausführungsform je eine Rückdruckfeder 74 und 75 am Befestigungsabschnitt 62 angebracht. Die Rückdruckfedern 74 und 75 legen sich in der in Fig. 11 dargestellten Freigabestellung an die benachbarte Unterseite des Rollengehäuses 2 derart an, daß der Stellhebel 8 in der Freigabestellung gesichert ist und somit spielfrei gehalten wird. In der in Fig. 12 dargestellten Bremsstellung belasten die Rückdruckfedern 74 und 75 den Stellhebel 8 in die Freigabestellung vor, so daß er nach Überschreiten der Übertotpunktlage der Kniehebelgelenkanordnung 50 in die Freigabestellung zurückschwenkt.

Aus den Fig. 13 und 14 sind ferner noch insgesamt vier Ausnehmungen 76 bis 79 ersichtlich, die im Beispielsfalle als Rundlöcher ausgebildet sind und durch die die Bolzen zur Bildung des Drehgelenkes 53 bzw. der Drehachse 55 hindurchgeführt werden. Die Fig. 11 und 12 verdeutlichen hierbei, daß der durch die Ausnehmungen 76 und 77 im Bereich des Endteiles 63 hindurchgeführte Bolzen auf das vorderste Ende des Teiles 63 aufliegt und so die Radbremsfläche 69 in der in Fig. 12 dargestellten Bremsstellung auf die Radoberfläche zur Blockierung der Drehbewegung des Rades drückt.

Durch diesen Bolzen der Gelenkanordnung 53 kann ferner eine Stellschraube geführt werden, die zur Nachstellung des Bremsabschnittes 56 und damit zum Ausgleich von Abnutzungen verwendet werden kann.

Bei der Ausführungsform gemäß den Fig. 11 - 14 stellt die Kniehebelgelenkanordnung 50 eine starre Übertragung dar, wohingegen der elastisch federnde gebogene und längsbewegliche Bremsabschnitt 65 sich frei bewegen kann, ohne einen kinematischen Einfluß auf die Kniehebelgelenkanordnung 50 auszuüben. Der nach Art einer Federzunge ausgebildete Bremsabschnitt 65 kann hierbei in seiner Form durch unterschiedliches Biegen verändert werden und dadurch an verschiedene Raddurchmesser angepaßt werden. Auch diese Formänderung beeinflußt die Kinematik der Kniehebelgelenkanordnung 50 nicht. Insofern bietet die Ausführungsform gemäß den Fig. 11 - 14 besondere Vorteile bei der Anpassung an unterschiedliche Einbauverhältnisse und Radgrößen und eine Ausgleichsmöglichkeit für eventuell auftretenden Verschleiß.

Wird der Stellhebel 8 von der in Fig. 11 dargestellten Freigabestellung in die Bremsstellung gemäß Fig. 12 um die Drehachse 3 geschwenkt, wird der Übertragungshebel 51 um sein Drehgelenk 52 verschwenkt, wonach er seine in Fig. 12 dargestellte Stellung einnimmt. Durch die Verschwenkung des Übertragungshebels 51 wird der starre Rahmen 54 um die Drehachse 55 in Richtung auf das Rad verschwenkt, wodurch der Bremsabschnitt 65 mit seiner Radbremsfläche 69 auf die Radumfangfläche 16 des Rades 4 gedrückt wird. Dies hindert das Rad 4 an einer Drehung um seine Drehachse 3.

Im Zuge der Verschwenkung des Rahmens 54 wird ebenfalls der Rastabschnitt gemäß der in den Fig. 11 und 12 gezeigten Dar-stellung nach oben um die Drehachse 55 verschwenkt, wodurch die Rastzähne 72 und 73 in Eingriff mit der Gegenverzahnung 23 gelangen, was aus Fig. 12 ersichtlich ist. Dieser Zahneingriff blockiert die Schwenkbewegung um den Tragzapfen 6.

## Ansprüche

1. Laufrolle (1), insbesondere Lenkrolle, für Möbel, Apparate und dergleichen
   - mit einem Rollengehäuse (2), das eine Radachse (3) für zumindest ein Rad (4) haltert, und
   - mit einer Blockiervorrichtung (7) zur Hemmung wenigstens der Drehbewegung des Rades (4),
   die einen am Rollengehäuse (2) schwenkbeweglich gelagerten Stellhebel (8) aufweist, der einen Bremsbetätigungsarm (9) und einen Bremslösearm (10) umfaßt, und die einen Bremshebel (11) aufweist, der schwenkbeweglich im Rollengehäuse (2) gelagert und durch Federkraft in eine die Drehbewegung des Rades (4) nicht hemmende Freigabestellung vorbelastet ist, und der mittels zumindest einer mit dem Stellhebel (8) zusammenwirkenden Druckanordnung (13,50) in eine die Drehbewegung des Rades (4) hemmende Bremsstellung entgegen der Federkraft überführbar ist; dadurch gekennzeichnet,
   - daß die Drehachse des Stellhebels (8) in der Radachse (3) liegt, und
   - daß die Drehachse des Bremshebels (11) außerhalb des Durchmessers des Rades (4) angeordnet ist.

2. Laufrolle nach Anspruch 1, dadurch gekennzeichnet, daß der Bremshebel (11) in sich federnd ausgebildet ist.

3. Laufrolle nach Anspruch 1 oder 2, dadurch gekennzeichnet, daß die Druckanordnung als am Bremslösearm (10) befestigte Nockenanordnung (13) ausgebildet ist.

4. Laufrolle nach Anspruch 1 oder 2, dadurch gekennzeichnet, daß die Druckanordnung als Kniehebelgelenkanordnung (50) ausgebildet ist.

5. Laufrolle nach einem der Ansprüche 1 - 3, dadurch gekennzeichnet, daß der Stellhebel (8) kappenartig ausgebildet ist.

6. Laufrolle nach einem der Ansprüche 1 - 5, dadurch gekennzeichnet, daß zwei Räder (4) vorgesehen sind, und daß der Stellhebel (8) zwischen den Rädern (4) angeordnet ist.

7. Laufrolle nach einem der Ansprüche 1 - 5, dadurch gekennzeichnet, daß das Rollengehäuse (2) als Konstruktion aus Federdrähten (24,25) ausgebildet ist, und daß der Stellhebel (8) zwischen den Federdrähten (24,25) angeordnet ist.

8. Laufrolle nach Anspruch 7, dadurch gekennzeichnet, daß der Stellhebel (8) ein im wesentlichen L-förmig ausgebildetes Basisteil (40) aufweist, dessen oberer Schenkel (41) sich etwa schräg nach oben und dessen unterer Schenkel (42) sich etwa horizontal erstreckt.

9. Laufrolle nach Anspruch 8, dadurch gekennzeichnet, daß der Bremslösearm (10) am oberen Schenkel (41) des L-förmigen Basisteiles (40) angeordnet ist und sich etwa horizontal vom Rad (4) wegerstreckt.

10. Laufrolle nach Anspruch 9, dadurch gekennzeichnet, daß am freien Ende des Bremslösearmes (10) ein Hohlprofil (35) mit der Trittfläche (18) angeordnet ist.

11. Laufrolle nach Anspruch 9 oder 10, dadurch gekennzeichnet, daß der Bremsbetätigungsarm (9) vom unteren Schenkel (42) des L-förmigen Basisteiles gebildet wird und an seinem freien Ende mit einem Querholm (360 versehen ist, der eine vor dem Rad (4) angeordnete Trittfläche (17) aufweist.

12. Laufrolle nach einem der Ansprüche 9 - 11, dadurch gekennzeichnet, daß der Stellhebel (8) aus zwei spiegelsymmetrisch aufgebauten Hebelteilen (37,38) ausgebildet ist.

13. Laufrolle nach Anspruch 12, dadurch gekennzeichnet, daß die Hebelteile (37,33) miteinander verschraubt sind.

14. Laufrolle nach Anspruch 12 oder 13, dadurch gekennzeichnet, daß der Stellhebel (8) als Fadenschutz ausgebildet ist und hierzu die Radachse (3) gehäuseartig umschließt.

15. Laufrolle nach einem der Ansprüche 9 - 14, dadurch gekennzeichnet, daß der Stellhebel (8) auf einer auf der Radachse (3) angeordneten Führungsbuchse (31) schwenkbeweglich gelagert ist.

16. Laufrolle nach Anspruch 4, dadurch gekennzeichnet, daß die Kniehebelgelenkanordnung (500 einen Übertragungshebel (51) aufweist, der an seinem einen Ende (52) schwenkbeweglich am Stellhebel (8) und an seinem anderen Ende (53) an einem Ende eines starren Rahmens (54) angreift, in dem der Bremshebel (56) angeordnet ist.

17. Laufrolle nach Anspruch 16, dadurch gekennzeichnet, daß die Drehachse (55) des Bremshebels (56) durch das andere Ende des starren Rahmens (54) verläuft.

18. Laufrolle nach Anspruch 16 oder 17, dadurch gekennzeichnet, daß der starre Rahmen (54) zwei parallel zueinander angeordnete beabstandete Rahmenteile (60,61) aufweist, zwischen denen der Bremshebel (56) angeordnet ist.

19. Laufrolle nach einem der Ansprüche 16 - 18, dadurch gekennzeichnet, daß der Bremshebel (56) einen federnden Bremsabschnitt (65) zur Einwirkung auf das Rad (4) und einen gegenüber angeordneten, elastischen mit Bremszähnen (72,73) versehenen Rastabschnitt (70) aufweist.

20. Laufrolle nach Anspruch 18 und 19, dadurch gekennzeichnet, daß der Bremshebel (56) einen starren Befestigungsabschnitt (62) aufweist, der an seinen seitlichen Enden (63,64) mit den Rahmenteilen (60,61) fest verbunden ist, und daß sich der Brems- und der Rastabschnitt (65,70) in entgegengesetzte Richtungen vom Befestigungsabschnitt (62) aus erstrekken.

21. Laufrolle nach einem der Ansprüche 16 - 20, dadurch gekennzeichnet, daß das freie Ende (63) des Bremsabschnittes (65) von einem Bolzen beaufschlagt ist, der gleichzeitig das Verbindungsteil zwischen dem starren Rahmen (54) und dem Übertragungshebel (51) bildet.

22. Laufrolle nach einem der Ansprüche 16 - 21, gekennzeichnet durch eine Stellschraube, die zur Nachstellung des Bremsabschnittes (65) auf diesen wirkt.

23. Laufrolle nach Anspruch 22, dadurch gekennzeichnet, daß die Stellschraube an den das freie Ende (68) des Bremsabschnittes (65) beaufschlagenden Bolzen angebracht ist.

24. Laufrolle nach einem der Ansprüche 16 - 23, gekennzeichnet durch zumindest eine Rückdruckfeder (74,75), die an dem dem Rastabschnitt (72) benachbarten Ende des Rahmens (54) angeordnet ist.

25. Lenkrolle nach Anspruch 1, 2 und 3, deren Rollengehäuse (2) über ein aus einem festen und einem drehbaren Teil bestehendes Kopflager (5) um eine vertikale Achse schwenkbeweglich gelagert ist, dadurch gekennzeichnet, daß der Bremshebel (11) als 2-armiger Hebel ausgebildet ist, dessen einer Arm mit der Nokkenanordnung (13) des Bremslösearmes (10) zusammenwirkt und dessen anderer Arm an seinem Ende mindestens einen Bremszahn (22) aufweist, der in der Bremsstellung in eine Gegenverzahnung (23) am festen Teil des kopflagers (5) eingreift.

26. Lenkrolle nach Anspruch 1, 2, 4 und einem der Ansprüche 16 - 24, deren Rollengehäuse (2) über ein aus einem festen und einem drehbaren Teil bestehendes Kopflager (5) um eine vertikale Achse schwenkbeweglich gelagert ist, dadurch gekennzeichnet, daß der Bremshebel (56) einen federnden gebogenen Bremsabschnitt (65) sowie einen mit Rastzähnen (72,73) versehenen Rastabschnitt (70) aufweist, die über einen starren Befestigungsabschnitt (62) in einem starren Rahmen (54) gelagert sind, und daß der Rahmen (54) Teil einer Kniehebelgelenkanordnung (50) ist, die zu ihrer Betätigung schwenkbeweglich mit dem Stellhebel (8) verbunden ist.

Figur 1

Figur 2

9

Figur 3

Figur 4

Figur 5

Figur 6

Figur 7

Figur 8

Figur 9

Figur 10

Figur 11

Figur 12

Figur 13

Figur 14

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C-6 721 97   (ALBERT SCHULTE SÖHNE)<br>* Seite 2, Zeilen 16 - 57; Figuren 1-3 *<br>– – – | 1,12,25 | B 60 B 33/02<br>B 62 B 5/04 |
| A | GB-A-2 188 832   (BRITISH CASTORS)<br>* Seite 1, Zeile 76 - Seite 2, Zeile 51; Figuren 1, 2 *<br>– – – | 1,2 | |
| A | GB-A-5 969 52   (BRITISH CASTORS)<br>* Seite 2, Zeilen 7 - 51; Figuren 1-3 *<br>– – – – – | 1,2 | |

| | | RECHERCHIERTE SACHGEBIETE (Int. Cl.5) |
|---|---|---|
| | | B 60 B<br>B 62 B |

Der vorliegende Recherchenbericht wurde für alle Patentansprüche erstellt

| Recherchenort | Abschlußdatum der Recherche | Prüfer |
|---|---|---|
| Den Haag | 12 März 91 | AYITER I. |